# FASCICULE DE BREVET EUROPEEN

(11) **EP 1 186 471 B1**
(45) Date de publication et mention de la délivrance du brevet: **01.10.2008**
(21) Numéro de dépôt: 01402328.7
(22) Date de dépôt: 10.09.2001
(51) Int. Cl.: B60Q 1/40

(54) **Dispositif pour la commande d'indicateurs de changement de direction sur véhicule automobile**
Steuerungseinrichtung für die Fahrtrichtungsanzeige eines Fahrzeuges
Control device for vehicle direction indicators

(30) Priorité: 12.09.2000 FR 0011576
(43) Date de publication de la demande: 13.03.2002
(73) Titulaire: SC2N, 78180 Montigny-le-Bretonneux (FR)
(72) Inventeur: Bihan, Marc, 14400 Le Manoir (FR); Greal, Patrick, 14370 Argences (FR)
(74) Mandataire: Texier, Christian

(56) Documents cités:
- WO-A-98/26952
- DE-A- 3 335 392
- DE-A- 4 328 427
- US-A- 5 457 443

## Description

La présente invention concerne le domaine des dispositifs de commande d'indicateurs de changement de direction sur véhicule automobile.

De très nombreux dispositifs ont déjà été proposés à cet effet.

La plupart des dispositifs connus comprennent :
- une platine support qui porte deux paires de contacts électriques, dédiés respectivement à l'alimentation des indicateurs de changement de direction gauche
ou droit, lesquelles paires de contacts sont susceptibles d'évoluer entre une position de fermeture dans laquelle les contacts sont en appui pour assurer l'alimentation d'un indicateur de changement de direction et une position d'ouverture dans laquelle les contacts électriques sont séparés,
- un équipage guidé à déplacement sur la platine support, associé à une manette de commande et portant deux cames disposées respectivement en regard d'une paire de contacts pour modifier l'état de ceux-ci,
- des moyens d'indexation de l'équipage dans son déplacement, les moyens d'indexage définissant une position instable pour l'équipage lorsque celui-ci est déplacé seulement sur une faible plage par rapport à sa position de repos (cette position initiale est nommée généralement "position autoroute" ; elle assure un retour en position de repos dès que la manette de commande est relâchée), et une position stable (cette dernière est généralement dénommée "position route") et
- des moyens aptes à détecter le sens de rotation de l'arbre de direction (généralement par détection d'une came liée à cet arbre) pour forcer les moyens d'indexage et l'équipage en position de repos, à partir de la position route, quand le volant est tourné dans un sens et sur une amplitude requis.

Le document DE-A-4328427 décrit un dispositif de commande d'indicateurs de changement de direction comprenant une platine support portant des sondes à effet Hall et un équipage monté à pivotement par rapport à cette platine et qui porte un ou deux aimant(s) permanent(s) adapté(s) pour modifier l'état des sondes à effet Hall selon le sens de déplacement de l'équipage mobile. Selon ce document pour un premier déplacement de l'équipage une sonde à effet Hall est sollicitée. Et pour un déplacement de l'équipage dans le sens opposé, l'autre sonde à effet Hall est sollicitée. En d'autres termes, selon ce document pour un sens donné de déplacement de l'équipage mobile, un seul transducteur formé d'une sonde à effet Hall est sollicité.

Le document US-5457443 décrit une structure globalement similaire à celle du document DE-4328427, sous la forme de transducteur à base de contacts électriques.

Les dispositifs du type connu précités ont déjà rendus de grands services. Cependant, ils ne donnent pas toujours satisfaction. En particulier, il s'avère que ces dispositifs connus sont de structure fort complexe.

La présente invention a pour but de perfectionner les dispositifs existant.

En particulier, la présente invention a pour but de proposer un nouveau dispositif apte à commander les indicateurs de changement de direction de véhicule automobile, présentant une structure plus simple que les dispositifs antérieurs connus.

Ce but est atteint dans le cadre de la présente invention grâce à un dispositif de commande d'indicateurs de changement de direction tel que défini en revendication 1 annexée laquelle est délimitée en préambule et partiel caractérisante par rapport au document DE-A-4328 427.

Selon une autre caractéristique avantageuse de la présente invention, les moyens de gestion du module d'analyse sont sensibles à au moins un paramètre de conduite du véhicule pour interrompre l'alimentation des indicateurs de changement de direction quand le ou les paramètres requis est (sont) détecté(s).

Selon une autre caractéristique avantageuse de la présente invention, l'équipage est conçu pour être déplacé successivement dans deux positions, à partir de sa position de repos, quel que soit le sens de déplacement : une position autoroute puis une position route, les deux actionneurs formés par exemple de cames étant adaptés pour activer l'un des transducteurs, par exemple porter des paires de contacts en position de fermeture, quand l'équipage est en position autoroute, selon le sens de déplacement, et les deux actionneurs étant adaptés pour activer les deux transducteurs, par exemple déplacer les deux paires de contacts en position de fermeture, quand l'équipage est en position route.

Selon une autre caractéristique avantageuse de la présente invention, les moyens de gestion du module d'analyse sont conçus pour induire l'alimentation provisoire type autoroute des indicateurs de direction gauche ou droit quand seulement un transducteur est activé, par exemple une paire de contacts est en position de fermeture, l'indicateur gauche ou droit alimenté étant défini par l'identification du transducteur activé, par exemple identification de la paire de contacts en position de fermeture.

Selon une autre caractéristique avantageuse de la présente invention, les moyens de gestion sont adaptés pour induire une alimentation stable type route des indicateurs de direction gauche ou droit quand deux transducteurs sont activés, par exemple quand deux paires de contacts sont fermées, l'indicateur gauche ou droit alimenté étant défini par l'identification du transducteur activé en premier, par exemple identification de la paire de contacts portée en premier lieu en position de fermeture.

Selon une autre caractéristique avantageuse de la présente invention, le dispositif comprend en outre au moins un capteur d'angle apte à détecter l'angle de rotation du volant et les moyens de gestion du module d'analyse sont sensibles à l'information délivrée par ce capteur pour piloter l'interruption de l'alimentation des indicateurs de changement de direction.

Selon une autre caractéristique avantageuse de la présente invention, le transducteur est choisi dans le groupe comprenant des contacts électriques, et des transducteurs sans contacts mécaniques, tels que des transducteurs optiques ou magnétiques, notamment des sondes à effet Hall.

D'autres caractéristiques, buts et avantages de la présente invention apparaîtront à la lecture de la description détaillée qui va suivre, et en regard des dessins annexés, donnés à titre d'exemple non limitatif et sur lesquels :
- les figures 1 et 2 représentent des vues similaires en coupe selon deux plans parallèles, d'un dispositif conforme à la présente invention, les deux plans de coupe précités passant respectivement par l'une des deux cames,
- la figure 3 représente partiellement le dispositif en position de repos,
- les figures 4 et 5 représentent des vues similaires du dispositif respectivement en position autoroute gauche et autoroute droit,
- les figures 6 et 7 représentent le même dispositif selon des vues similaires respectivement dans des positions route gauche et route droit,
- la figure 8 représente une table de vérité de l'état des contacts électriques respectivement pour un clignotant mécanique conforme à l'état de la technique et selon l'invention,
- la figure 9 représente une vue schématique de l'algorithme général de fonctionnement des moyens d'analyse conformes à la présente invention,
- la figure 10 représente une vue détaillée de cet algorithme, pour le module d'extinction manuelle des indicateurs, et
- la figure 11 représente une vue détaillée de cet algorithme, pour le module d'extinction automatique des indicateurs.

Le dispositif conforme à la présente invention comprend essentiellement une platine support 100, un équipage mobile 200, des moyens transducteurs 300, par exemple sous forme de moyens de contactage électrique, des moyens d'indexage 400 et des moyens d'analyse ou de gestion.

La platine support 100 peut faire l'objet de nombreuses configurations. Elle peut porter bien entendu d'autres fonctions que la fonction commande d'indicateurs de changement de direction. Pour toutes ces raisons, la structure de la platine support 100 ne sera pas décrite plus en détail par la suite.

De préférence, l'équipage 200 est monté à pivotement sur la platine support 100 autour d'un axe O-O. Cependant, l'invention n'est pas limitée à cette disposition. En variante, l'invention s'applique également à des dispositifs dans lesquels l'équipage 200 est monté à translation sur la platine support 100.

L'équipage 200 peut également faire l'objet de nombreuses variantes de réalisation. Il ne sera donc pas décrit dans le détail par la suite.

L'on notera néanmoins que de préférence, et de façon classique en soi, l'équipage 200 est entraîné dans son déplacement, directement ou indirectement par une manette de commande à actionnement manuel.

Plus précisément encore, une telle manette est conçue de préférence pour être déplacée à pivotement autour de l'axe O-O, à partir d'une position de repos médiane, alternativement dans un sens ou dans l'autre, selon le côté des indicateurs de changement de direction à alimenter. La manette provoque seulement une alimentation provisoire de ces indicateurs (position autoroute) lorsqu'elle est déplacée à pivotement sur une course d'amplitude limitée. Dans ce cas l'indicateur sélectionné est alimenté tant que la manette est maintenue dans la position autoroute. L'alimentation de cet indicateur est interrompue lorsque la manette est relâchée. Au contraire, la manette provoque une alimentation permanente de ces indicateurs (position route), tant qu'un événement externe n'impose pas l'interruption de cette alimentation, lorsqu'elle est déplacée sur une course supérieure.

On va maintenant décrire un mode de réalisation préférentiel des moyens transducteurs 300 conformes à la présente invention, constitués à base de moyens de contactage électrique.

Cependant comme on l'a indiqué précédemment, la présente invention n'est pas limitée à ce mode de réalisation particulier.

Elle peut englober tout type de transducteurs, en particulier des transducteurs sans contacts mécaniques, tels que des transducteurs optiques ou magnétiques, notamment des sondes à effet Hall.

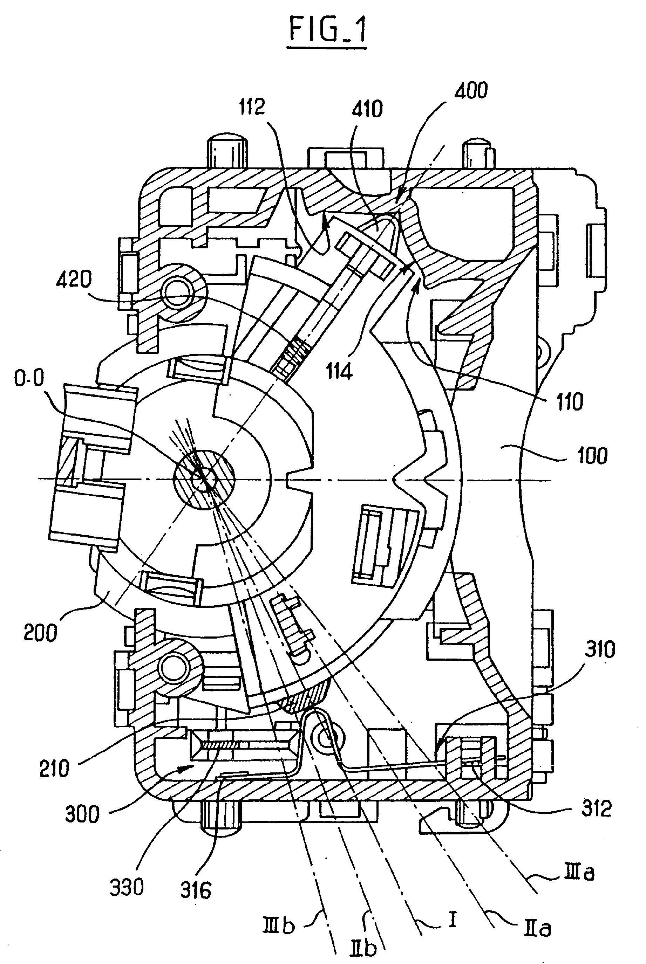

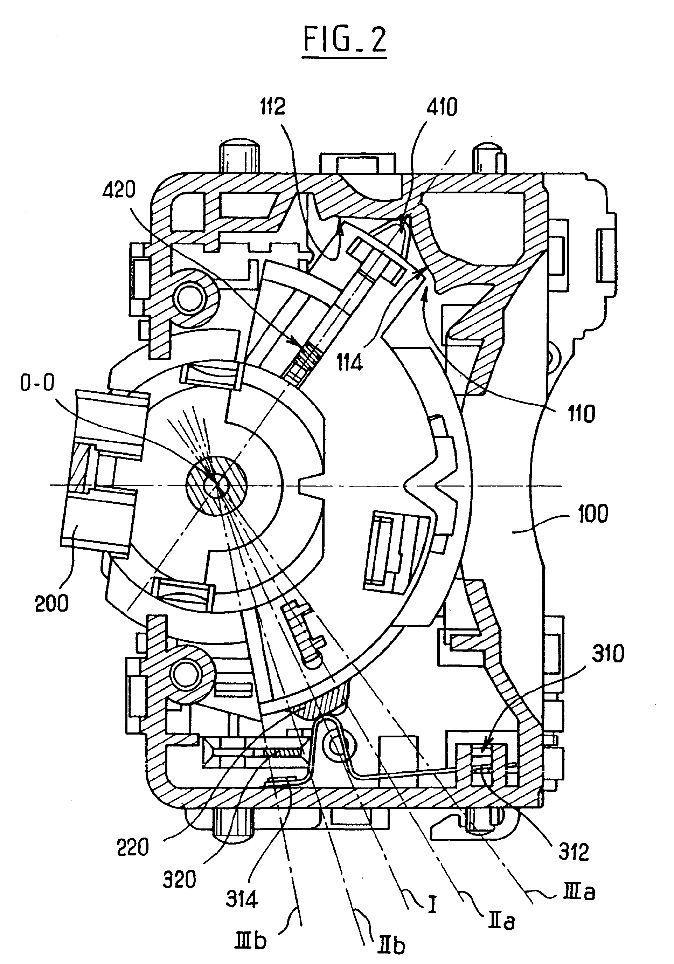

L'équipage 200 porte deux cames 210, 220 visibles notamment respectivement sur les figures 1 et 2.

Les moyens de contactages électriques 300 portés par la platine 100 comprennent deux paires de contacts. De préférence, ces moyens de contactage comprennent une lame unique 310 en matériau électriquement conducteur comportant une base commune 312 reliée à une piste électriquement conductrice, laquelle base 312 se dédouble en deux brins 314, 316, globalement parallèles mais de préférence de longueur différente.

Les extrémités de ces deux brins 314, 316 sont placés respectivement en regard de deux pistes séparées 320, 330 ou plots portés par la platine support 100.

La lame 310 est réalisée en matériau élastique de sorte que les extrémités des deux brins 314, 316 sont sollicités en appui contre les pistes homologues 320, 330, c'est-à-dire en position de fermeture, au repos. Néanmoins, comme on va le décrire par la suite, les cames 210, 220 portées par l'équipage 200 sont susceptibles sélectivement de solliciter l'un des brins 314, 316 pour écarter celui-ci du contact associé 320, 330.

Le cas échéant, l'extrémité des brins 314, 316, et/ou les pistes 320, 330, peuvent être munies de grains de contact en matériau noble pour garantir un contact électrique satisfaisant quel que soit l'étincelage éventuel rencontré.

Ainsi, une première paire de contacts est formée par les éléments 316, 330. La seconde paire de contacts est formée par les éléments 314, 320.

Les deux brins 314, 316 étant formés par division de la lame 310 à partir de la base 312, les deux brins 314, 316 sont juxtaposés respectivement en regard des cames 220, 210.

Plus précisément encore, comme on le voit sur les figures annexées, de préférence, chacun des deux brins 314, 316 comporte entre la base commune 312 et l'extrémité des brins 314, 316, une incurvation 315, 317, convexe en direction de l'équipage 200 et placée en regard des cames 210, 220 de sorte que lors du déplacement de l'équipage 200 c'est cette incurvation 315, 317 que les cames 220, 210 viennent solliciter sélectivement pour contrôler l'écartement entre les brins 314, 316 et les pistes 320, 330 associées.

Les deux cames 210, 220, selon le mode de réalisation préférentiel illustré sur les figures annexées, sont formées chacune d'une protubérance d'ouverture angulaire contrôlée en saillie sur la périphérie de l'équipage 200. Les deux cames 210, 220 sont symétriques par rapport à un plan radial I de l'équipage. En position de repos ce plan I passe par les incurvations 315, 317 des brins 320, 330 comme on le voit sur les figures 1 et 2.

Les deux cames 210, 220 sont adaptées pour écarter les deux brins 314, 316 de leurs contacts associés 320, 330 en position de repos. Les deux cames 310, 320 sont également adaptées pour maintenir les brins 314, 316 écartés de leurs contacts associés 320, 330 lorsque l'équipage 200 est déplacé sur une petite course à partir de cette position de repos. Plus précisément, les cames 210, 220 sont adaptées pour maintenir respectivement écartées l'un des deux brins 314 ou 316 selon le sens de déplacement de l'équipage 200.

Ainsi, selon la représentation donnée sur les figures 1 et 2, lorsque l'équipage 200 est entraîné à déplacement sur une petite course, dans le sens des aiguilles d'une montre, à partir de la position représentée sur les figures 1 et 2, la came 210 libère la lame 316 pour autoriser la fermeture du contact entre les éléments 316 et 330 tandis que la came 220 maintient le brin 314 écarté de la piste associée 320.

Au contraire, lorsque l'équipage 200 est entraîné à rotation dans le sens trigonométrique, la came 210 maintient le brin 316 écarté de la piste 330, tandis que la came 220 autorise le déplacement du brin 314 contre la piste 320 pour former alors un contact fermé.

La position qui précède correspond à la position dite autoroute.

Par ailleurs, les deux cames 210, 220 sont adaptées pour autoriser la fermeture des deux contacts (316 contre 330 d'une part, et 314 contre 320 d'autre part) dès lors que l'équipage 200 est entraîné à déplacement sur une course plus importante. On obtient alors les positions dites route.

Les positions dites autoroute précitées sont obtenues lorsque l'un des deux plans radiaux IIa ou IIb de l'équipage 200 illustré sur les figures 1 et 2 coïncide avec les incurvations 315, 317. Au contraire, les positions route sont obtenues lorsque l'un des deux plans IIIa ou IIIb illustrés sur les figures 1 et 2 de l'équipage 200 passe par les incurvations 315 et 317.

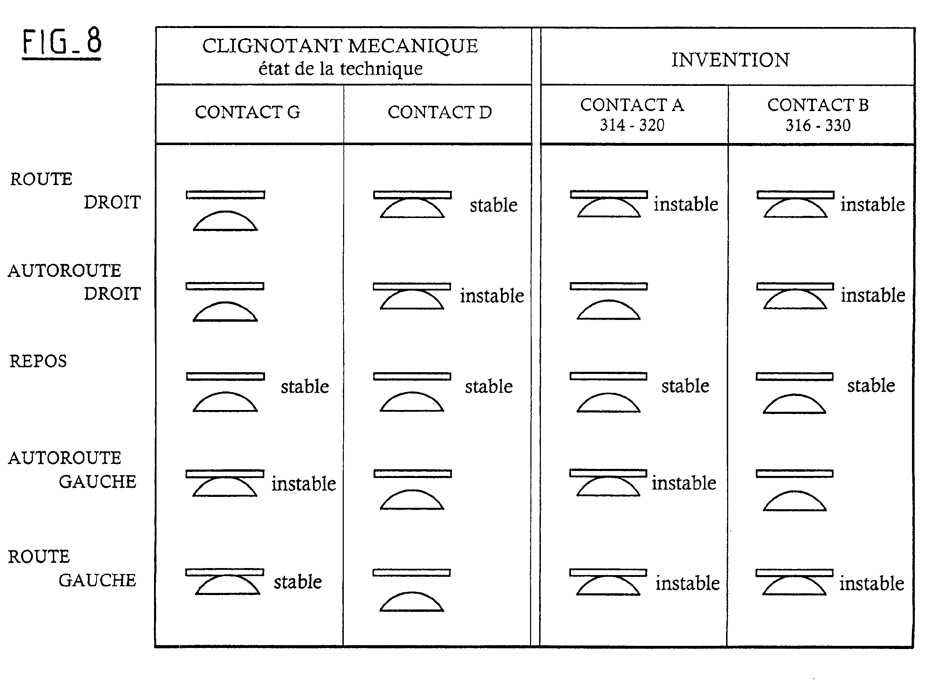

La table de vérité correspondante des contacts est illustrée sur la figure 8.

L'on peut distinguer cinq secteurs angulaires sur la périphérie de l'équipage 200 centrés respectivement sur l'un des cinq plans I, IIa, IIb, IIIa, IIIb précités.

Chacune des deux cames 210, 220 couvre deux de ces secteurs.

Plus précisément encore, les deux cames 210, 220 couvrent en commun le secteur centré sur le plan médian I.

Par ailleurs, comme on le voit sur les figures 1 et 2, la came 210 couvre le secteur défini par le plan IIb tandis que la came 220 couvre le secteur défini par le plan IIa.

Les moyens de gestion et d'analyse précités sont reliés aux pistes 320, 330 et à la lame 310. Ainsi, ils peuvent détecter l'état fermé ou ouvert des paires de contacts précitées.

Comme on le voit sur la figure 8, dans un dispositif de commande d'indicateurs de changement de direction classique de type mécanique, lorsque l'équipage mobile est déplacé à pivotement dans un premier sens donné, l'un des contacts est placé en position instable fermée puis en position stable fermée ; et si l'équipage est déplacé dans le sens opposé, l'autre contact est placé successivement en position fermée instable puis stable.

Par contre, dans le cadre de l'invention, le fonctionnement est le suivant.

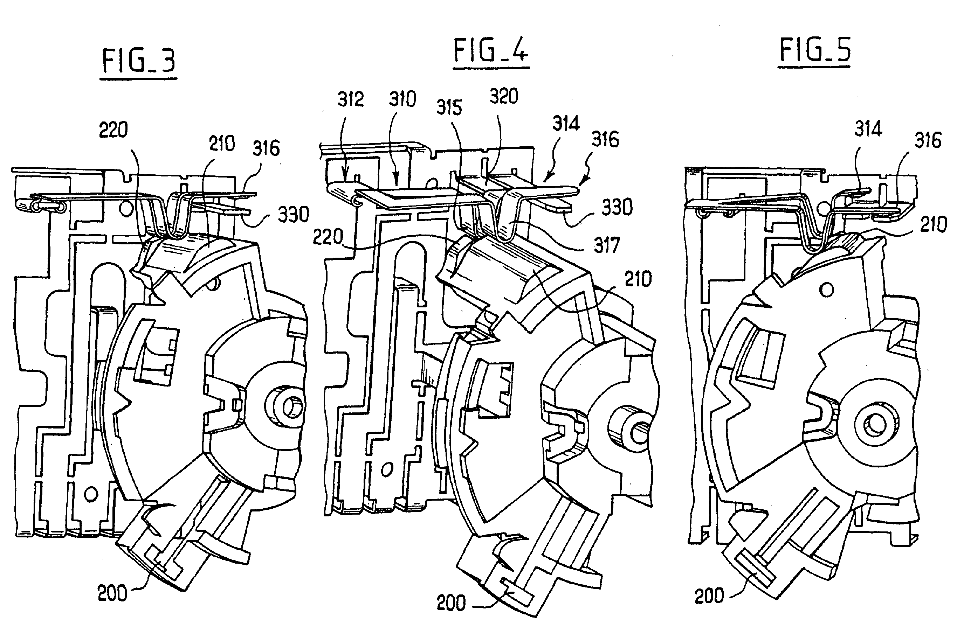

En position de repos, les deux brins 314, 316 sont sollicités par les cames 220, 210 tel qu'illustré sur la figure 3. Le dispositif est en position stable et les deux paires de contacts sont séparées. Aucun indicateur de changement de direction ne sera alimenté.

Lorsque l'équipage mobile 200 est déplacé sur une petite course dans le sens trigonométrique, le plan IIb vient coïncider avec les incurvations 315, 317. La came 220 libère alors le brin 314 pour établir un contact fermé instable entre le brin 314 et la piste 320. La came 210 quant à elle maintient la sollicitation sur le brin 316 pour maintenir un contact ouvert par rapport à la piste 330. Le dispositif est placé en position autoroute gauche telle qu'illustrée sur la figure 4.

Si l'amplitude du pivotement de l'équipage 200 est amplifiée toujours dans le sens trigonométrique, le plan IIIb vient coïncider avec les incurvations 315, 317. Les deux cames 210, 220 libèrent alors les brins 314, 316. On obtient deux paires de contacts fermés en position instable. Le dispositif est placé en position route gauche telle qu'illustrée sur la figure 5.

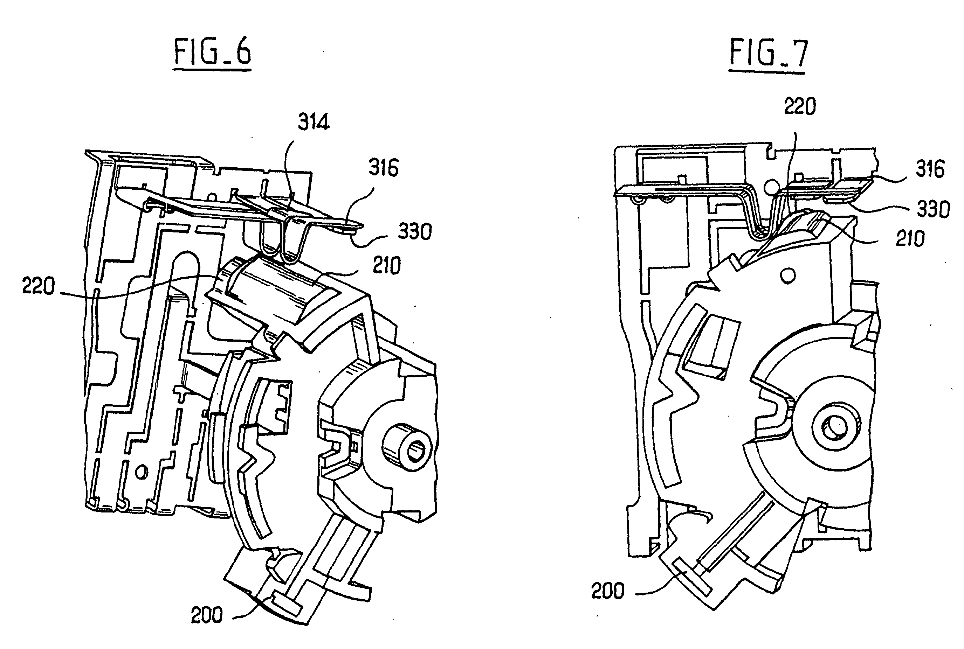

De manière symétrique, si l'équipage mobile 200 est déplacé sur une petite course dans le sens des aiguilles du montre à partir de la position de repos illustré sur la figure 3, le plan IIa vient coïncider avec les incurvations 315, 317. La came 210 libère alors le brin 316 pour autoriser un contact fermé instable tandis que la came 220 maintient sa sollicitation sur le brin 314 pour maintenir un contact ouvert. Le dispositif est placé en position autoroute droit telle qu'illustrée sur la figure 6.

Et si l'amplitude de pivotement de l'équipage 200 est amplifiée toujours dans le sens des aiguilles d'une montre, le plan IIIa vient coïncider avec les incurvations 315, 317 de sorte que les deux cames 210, 220 libèrent les brins 314, 316 pour définir alors deux contacts fermés instables. Le dispositif est placé en position route droit telle qu'illustrée sur la figure 7.

Comme on l'a indiqué précédemment, les moyens de gestion ou d'analyse sont reliés à la lame 310 et aux contacts 320, 330 pour discriminer selon l'état de la table de vérité illustrée sur la figure 8, la nature des indicateurs de changement de direction à alimenter.

Lorsque les moyens d'analyse détectent que seule la paire de contacts 314, 320 est fermée, les moyens d'analyse commandent l'alimentation en position autoroute des indicateurs de changement de direction gauche.

Lorsque les moyens d'analyse détectent que seule la paire de contacts 316, 330 est en position fermée, il commande l'alimentation en position autoroute des indicateurs de changement de direction droit.

Lorsque les moyens d'analyse détectent que les deux paires de contacts 314, 320 et 316, 330 sont en position fermée, ils commandent l'alimentation en position route des indicateurs gauche s'ils ont détecté en premier lieu la fermeture du contact 314, 320 et au contraire l'alimentation en position route des indicateurs droits, s'ils ont détecté en premier lieu la fermeture du contact 316, 330.

Comme on l'a indiqué précédemment, les moyens d'analyse sont par ailleurs sensibles aux paramètres de conduite du véhicule pour interrompre l'alimentation des indicateurs de changement de direction lorsque les paramètres requis, qui diffèrent selon que l'alimentation est de type route ou autoroute, sont détectés.

De préférence, dans le cadre de la présente invention, les moyens de gestion et d'analyse sont pilotés par un capteur d'angle sensible à l'angle de rotation du volant.

En position autoroute, les moyens de gestion et d'analyse imposent l'interruption d'alimentation des indicateurs de changement de direction lorsqu'ils détectent le pivotement du volant sur un petit angle dans le sens d'un rappel. Par exemple, si l'indicateur de direction gauche est alimenté en position autoroute, les moyens de gestion et d'analyse interrompent cette alimentation s'ils détectent un petit angle de pivotement du volant vers la droite.

L'interruption de l'alimentation des indicateurs de changement de direction, à partir d'une position route exige quant à elle un angle de pivotement du volant supérieur.

On rappelle que tous les états des paires de contacts 314, 320 et 316, 330 précités, en dehors de la position de repos, sont instables puisque l'équipage 200 est ramené en position de repos dès que la manette de commande est relâchée.

Dans ce contexte, de préférence, le conducteur du véhicule peut également imposer l'interruption de l'alimentation des indicateurs de changement de direction, à partir de la position route, en opérant pour cela deux commandes à déplacement successives de l'équipage 200 dans une plage de temps limitée.

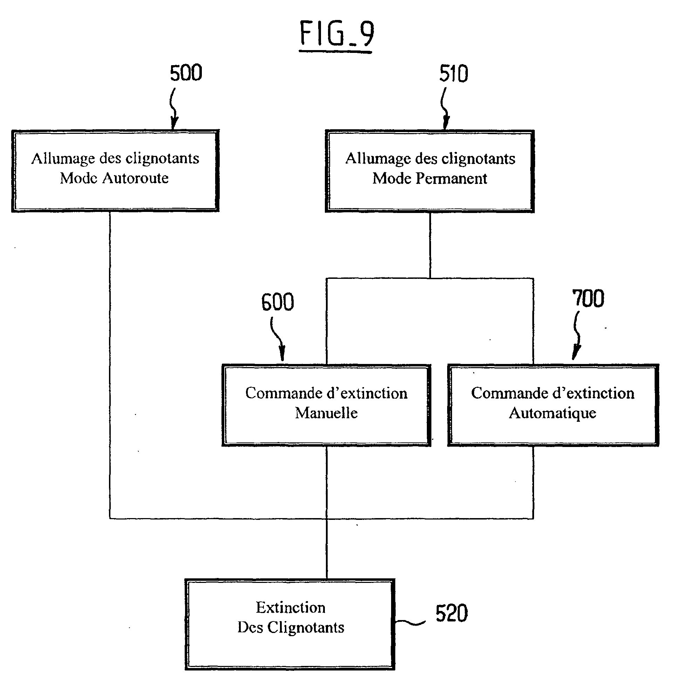

On retrouve l'algorithme général de gestion conforme à la présente invention sur la figure 9 annexée.

Sur cette figure on a représenté deux étapes 500, 510 d'allumage des indicateurs de changement de direction, respectivement en instable pour la position autoroute (étape 500) et en mode permanent pour la position route (étape 510), selon que la manette est déplacée sur une course limitée, ou au contraire sur une course plus importante, comme indiqué précédemment.

Dans le cas de l'étape 500 de mode autoroute, l'extinction des indicateurs (étape 520) est obtenue dès que la manette est relâchée.

Au contraire dans le cas de l'étape 510 de mode permanent, l'extinction des indicateurs, correspondant à l'étape 520, n'est obtenue qu'après commande manuelle de l'extinction à l'étape intermédiaire 600, ou commande automatique de l'extinction, à l'étape intermédiaire 700, sur la base de l'analyse des paramètres de déplacement du véhicule.

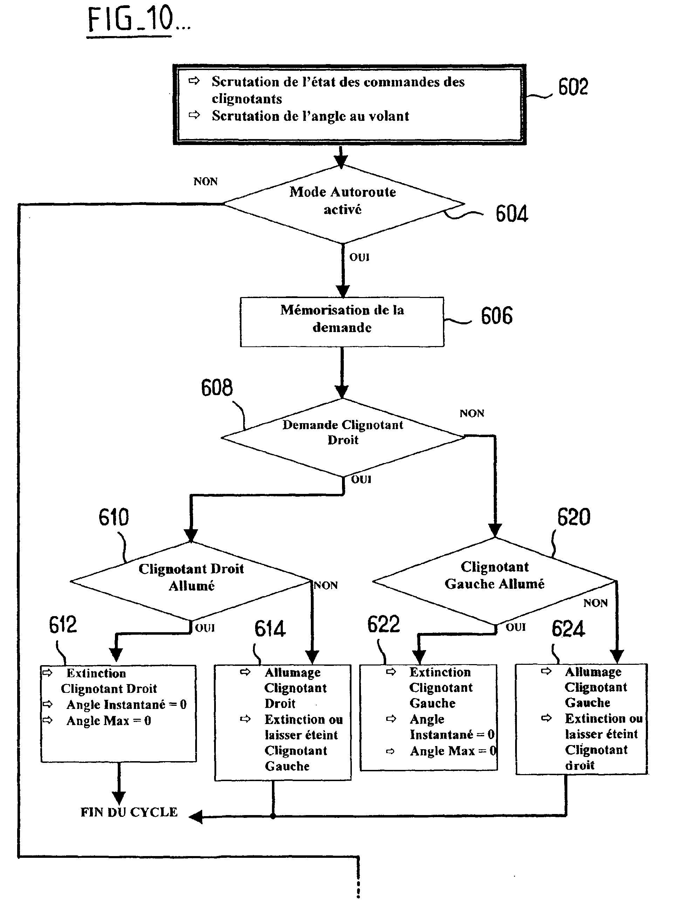

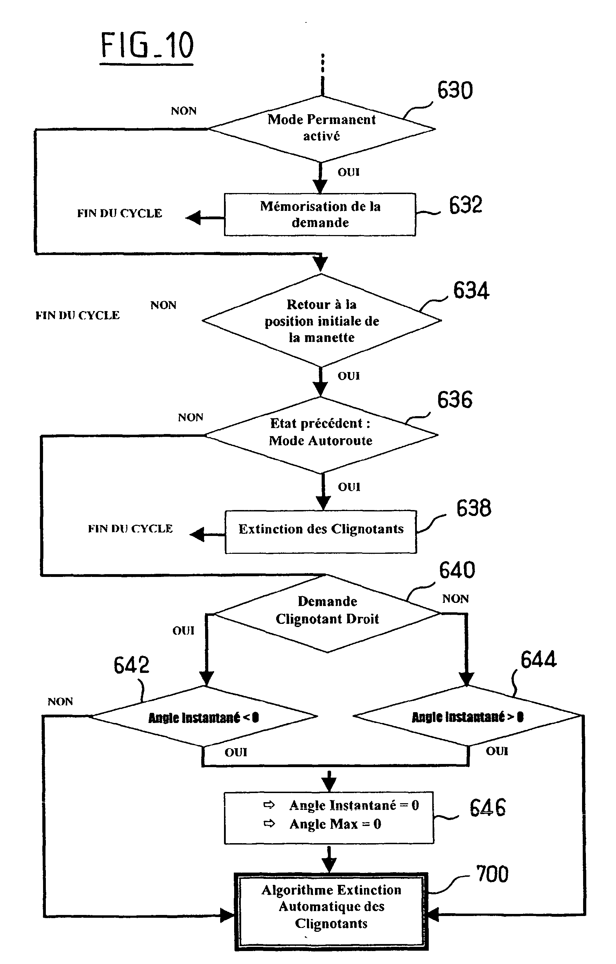

On va maintenant décrire le processus de commande d'allumage/extinction manuelle des indicateurs, au vu de la figure 10 annexée.

A l'étape initiale 602, le module d'analyse scrute l'état des transducteurs 300 assurant la commande des indicateurs et l'angle au volant délivré par un capteur adapté.

A l'étape 604, le module d'analyse exploite les paramètres précités pour déterminer si le mode autoroute est activé ou non. En pratique cette détection peut être opérée par détection d'une nouvelle position de la manette représentée par un changement de front en sortie des transducteurs.

Tant que le module d'analyse ne détecte pas que le mode autoroute est activé, l'étape 604 est suivie d'une étape 630 qui sera décrite par la suite.

Au contraire lorsque le module d'analyse détecte que le mode autoroute est activé, l'étape 604 est suivie d'une étape 606 de mémorisation de la demande. La position de la manette est alors mémorisée. Cette étape permet au prochain cycle de détecter une nouvelle demande.

Après l'étape 606, le module d'analyse détecte la nature de l'indicateur sollicité (droite ou gauche). Pour cela par exemple il recherche à l'étape 608 si la demande d'alimentation concerne l'indicateur droit ou non.

Puis le module d'analyse va lire l'état des indicateurs avant la commande, dans des étapes 610, 620. Et au cours d'étapes 612, 614, 622, 624 le module d'analyse gère l'état final des indicateurs en fonction de leur état initial et de la commande.

Dans le cadre de ce processus, on appelle « angle instantané » une mesure instantanée de l'angle de rotation du volant et « angle max », l'angle de rotation maximum effectué par le volant depuis l'allumage d'un des indicateurs quand le sens de cette rotation correspond à la nature de la demande.

Dans le cas d'une réponse affirmative à l'étape 608, le module d'analyse recherche à l'étape 610 si l'indicateur droit était précédemment alimenté.

Dans le cas d'une réponse affirmative à l'étape 610, le module d'analyse considère que la sollicitation de la manette correspond à une demande de remise à zéro des indicateurs droits, provoque en conséquence l'extinction des indicateurs droits, et actualise les paramètres « angle instantané » et « angle max » à 0, à l'étape 612.

Dans le cas d'une réponse négative à l'étape 610, le module d'analyse provoque à l'étape 614, l'allumage des indicateurs droits, et éteint les indicateurs gauches, si ceux-ci étaient précédemment allumés, ou les laisse éteints.

Dans le cas d'une réponse négative à l'étape 608, le module d'analyse recherche à l'étape 620 si l'indicateur gauche était précédemment alimenté.

Dans le cas d'une réponse affirmative à l'étape 620, le module d'analyse considère que la sollicitation de la manette correspond à une demande de remise à zéro des indicateurs gauches, provoque en conséquence l'extinction de ces indicateurs gauches, et actualise les paramètres « angle instantané» et « angle max » à 0, à l'étape 622.

Dans le cas d'une réponse négative à l'étape 620, le module d'analyse provoque à l'étape 624, l'allumage des indicateurs gauches, et éteint les indicateurs droits, si ceux-ci étaient précédemment allumés, ou les laisse éteints.

Les étapes 612, 614, 622 et 624 sont suivies d'une étape de fin de cycle.

Comme indiqué précédemment, en cas de réponse négative, l'étape 604 est suivie d'une étape 630 au cours de laquelle le module d'analyse exploite les paramètres d'état des transducteurs et d'angle du volant pour déterminer si le mode permanent est activé ou non. En pratique cette détection peut être opérée par détection d'une nouvelle position de la manette représentée par un changement de front en sortie des transducteurs.

Lorsque le module d'analyse détecte à l'étape 630 que le mode permanent est activé, l'étape 630 est suivie d'une étape 632 de mémorisation de la demande. La position de la manette est alors mémorisée. Cette étape permet au prochain cycle de détecter une nouvelle demande.

L'étape 632 est elle même suivie d'une étape de fin de cycle.

Au contraire si le module d'analyse détecte au cours de l'étape 630 que le mode permanent n'est pas activé, l'étape 630 est suivie d'une étape 634 au cours de laquelle il recherche si l'état correspond à un retour de la manette à la position de repos initiale. En pratique cette détection peut être opérée par détection d'une nouvelle position de la manette représentée par un changement de front en sortie des transducteurs.

Dans la négative, l'étape 634 est suivie d'une fin de cycle.

Au contraire dans l'affirmative, le module d'analyse recherche à l'étape 636 la position précédente de la manette.

Typiquement il examine si l'état précédent était le mode autoroute.

Dans l'affirmative, le module d'analyse assimile le retour de la manette à un relachement et commande, à l'étape 638, l'extinction de l'indicateur précédemment allumé, puis va vers la fin du cycle.

Au contraire, en cas de réponse négative à l'étape 636, le module d'analyse considère que l'état antérieur était le mode permanent.

Il opère alors à l'étape 640 la lecture de la nature de la commande (droite ou gauche), par exemple en recherchant si la demande concerne l'indicateur droit.

Puis le module d'analyse va lire au cours d'étapes 642, 644, le signe de l'angle instantané qui détermine le sens de rotation du volant. Si l'angle est négatif, la rotation est à gauche. Au contraire si l'angle est positif, la rotation est à droite.

Si la réponse est positive à l'étape 640, le module d'analyse recherche ainsi à l'étape 642 si l'angle instantané est négatif.

En cas de réponse négative, après l'étape 642, le module d'analyse met en oeuvre l'algorithme 700 d'extinction automatique des indicateurs.

En cas de réponse positive à l'étape 642, la rotation étant à gauche soit contraire à la nature de la commande détectée à l'étape 640, le module d'analyse provoque à l'étape 646 une réinitialisation des valeurs d'angle, en plaçant les paramètres « angle instantané » et « angle max » à 0.

Si la réponse à la question de l'étape 640 est négative, la commande est à gauche. Le module d'analyse examine alors à l'étape 644 si l'angle instantané est positif.

En cas de réponse négative, après l'étape 644, le module d'analyse met en oeuvre l'algorithme 700 d'extinction automatique des indicateurs.

En cas de réponse positive à l'étape 644, la rotation étant à droite soit contraire à la nature de la commande détectée à l'étape 640, le module d'analyse provoque à l'étape 646 une réinitialisation des valeurs d'angle, en plaçant les paramètres « angle instantané » et « angle max » à 0.

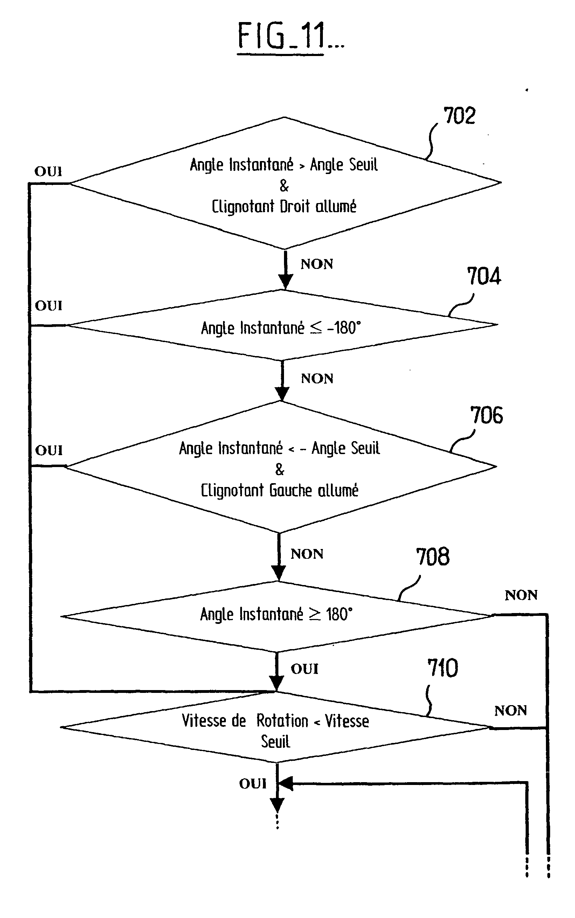

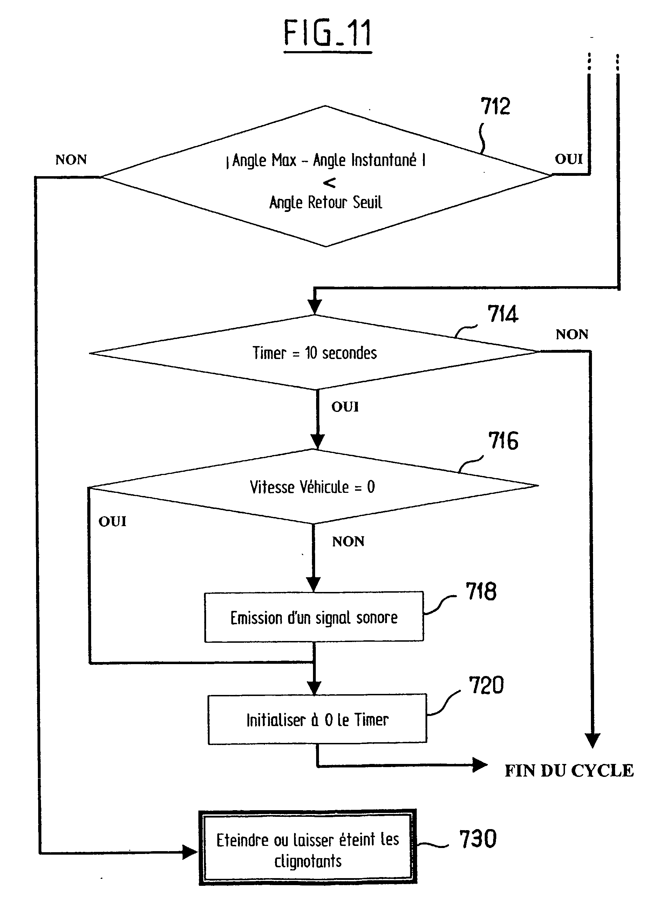

On va maintenant décrire le processus de commande d'extinction automatique des indicateurs, au vu de la figure 11 annexée.

Pour valider l'action de l'entrée dans une courbe, par exemple une courbe à droite, il faut que l'angle de rotation du volant soit supérieur à un angle seuil que l'on choisit comme le plus reproductible dans les différentes configurations du réseau routier. Pour cela à l'étape 702, le module d'analyse recherche si l'angle instantané est supérieur à l'angle seuil et si par exemple l'indicateur droit est allumé.

Dans la négative, le module d'analyse recherche à l'étape 704 si l'angle instantané est inférieur ou égal à -180°. Ce cas de figure reproduit la configuration mécanique classique du retour de la manette.

Si la réponse à la question de l'étape 704 est négative, celle-ci est suivie d'une étape 706 symétrique de l'étape 702, au cours de laquelle, pour valider l'action de l'entrée dans une courbe à gauche, il faut que l'angle de rotation du volant soit infarieur à un angle seuil négatif que l'on choisit comme le plus reproductible dans les différentes configurations du réseau routier. Pour cela à l'étape 706, le module d'analyse recherche si l'angle instantané est inférieur à l'angle seuil négatif et si l'indicateur gauche est allumé.

Dans la négative, le module d'analyse recherche à l'étape 708 si l'angle instantané est supérieur ou égal à 180°. Ce cas de figure reproduit la configuration mécanique classique du retour de la manette, comme l'étape 704.

Les étapes 702, 704, 706 et 708 en cas de réponses positives, sont suivies d'une étape 710 destinée à invalider la rotation du volant si celle-ci dépasse un seuil de vitesse que l'on choisit. Une telle circonstance est en effet représentative d'une manoeuvre d'évitement. Pour cela à l'étape 710, le module d'analyse si la vitesse de rotation du volant est inférieur à vitesse seuil.

Dans l'affirmative, le module d'analyse procède à une étape 712 de validation de la sortie d'une courbe. Pour cela le module d'analyse recherche si l'angle de rotation inverse que l'on imprime au volant pour remettre les roues droites est supérieur à un angle retour seuil. A cette fin le module d'analyse recherche si la différence (angle max - angle instantané) est inférieur à l'angle retour seuil.

Dans la négative, l'on est en présence d'une sortie de courbe. L'étape 712 est alors suivie de l'étape 730 d'extinction des indicateurs.

Si au contraire l'étape 712 connaît une réponse positive, la sortie de courbe n'est pas encore opérée. Cette étape est alors rebouclée sur elle même.

Dans le cas ou les étapes 708 et 710 connaissent des réponses négatives, le module d'analyse lit le temps de fonctionnement des indicateurs, à l'étape 714, par exemple en examinant si une durée de fonctionnement de 10 secondes est atteinte.

Dans la négative on va vers une fin de cycle.

Dans l'affirmative, le module d'analyse recherche à l'étape 716 si le véhicule est à l'arrêt.

Si les indicateurs sont en fonctionnement depuis plus de 10 secondes et si le véhicule est à l'arrêt (réponse positive à l'étape 716), le module d'analyse initialise une temporisation, à l'étape 720. Celle-ci est suivie d'une fin de cycle.

Si au contraire les indicateurs sont en fonctionnement depuis plus de 10 secondes, et que le véhicule n'est pas à l'arrêt (réponse négative à l'étape 716), le module d'analyse émet un signal sonore, à l'étape 718, avant de remettre la temporisation à zéro, à l'étape 720. L'attention du conducteur est alors attirée sur le fonctionnement prolongé des indicateurs.

La prise en compte de l'arrêt du véhicule, à l'étape 716, évite l'émission du signal sonore dans le cas par exemple du véhicule à l'arrêt à un feu tricolore.

Le processus de commande manuelle d'allumage/extinction des indicateurs peut être résumé sur le tableau 1 ci-dessous.

**TABLEAU 1**

| Etat Initial Lampes | Nature de la Commande Clignotants | Mode de la Commande Clignotants | **Etat Final Lampes** |
|---|---|---|---|
| Eteintes | Commande Droite | Permanent | **Droite Allumée** |
| Eteintes | Commande Gauche | Permanent | **Gauche Allumée** |
| Droite Allumée | Commande Droite | Permanent | **Eteintes** |
| Droite Allumée | Commande Gauche | Permanent | **Gauche Allumée** |
| Gauche Allumée | Commande Droite | Permanent | **Droite Allumée** |
| Gauche Allumée | Commande Gauche | Permanent | **Eteintes** |
| Eteintes | Commande Droite | Autoroute | **Droite Allumée** |
| Eteintes | Commande Gauche | Autoroute | **Gauche Allumée** |
| Droite Allumée | Commande Droite | Autoroute | **Eteintes** |
| Droite Allumée | Commande Gauche | Autoroute | **Gauche Allumée** |
| Gauche Allumée | Commande Droite | Autoroute | **Droite Allumée** |
| Gauche Allumée | Commande Gauche | Autoroute | **Eteintes** |

Le processus de commande d'extinction automatique des indicateurs peut être résumé sur le tableau 2 ci-dessous.

**TABLEAU 2**

| Cas N° | Nature Commande / Valeur de l'angle de Rotation au volant précédent la Nouvelle Commande | Angle de Rotation du Volant effectué après la Commande en Entrée de Courbe Etapes 702 à 708 | Angle de Rotation du Volant en Sortie de Courbe Etape 712 | Signal Sonore Emis | Lampes Eteintes |
|---|---|---|---|---|---|
| 1 | Droite | > Angle Seuil ou < -180° | > Angle Retour Seuil | NON | OUI |
| 2 | Droite | < Angle Seuil ou > -180° | *Sans Objet ^{(*)}* | OUI *****) | NON |
| 3 | Gauche | < - Angle Seuil ou > 180° | > Angle Retour Seuil | NON | OUI |
| 4 | Gauche | > - Angle Seuil ou < 180° | *Sans Objet* ^{(*)} | OUI | NON |
| 5 | Gauche | < - Angle Seuil ou > 180° | < Angle Retour Seuil | NON | NON |
| 6 | Droite | > Angle Seuil ou < -180° | < Angle Retour Seuil | NON | NON |
| 7 | Droite / α ^{(**)} < 0° ^{(***)} | *Cf. Cas N° 1,2 et 6* | | | |
| 8 | Droite / 0° ≤ α < Angle Seuil | > Angle Seuil - α ou < -180° + α | > Angle Retour Seuil | NON | OUI |
| 9 | Droite / 0° ≤ α < Angle Seuil | > Angle Seuil - α ou < -180° + α | < Angle Retour Seuil | NON | NON |
| 10 | Droite / α ≥ Angle Seuil | Sans objet ^{(****)} | > Angle Retour Seuil | NON | OUI |
| 11 | Droite / α ≥ Angle seuil | Sans objet ^{(****)} | < Angle Retour Seuil | NON | NON |
| 12 | Gauche / α > 0° ^{(***)} | *Cf. Cas N° 3, 4 et 5* | | | |
| 13 | Gauche / -Angle seuil < α ≤ 0° | < -Angle Seuil - α ou > 180° - α | > Angle Retour Seuil | NON | OUI |
| 14 | Gauche / -Angle seuil < α ≤ 0° | > Angle Seuil - α ou > 180° - α | < Angle Retour Seuil | NON | NON |
| 15 | Gauche / α ≤ -Angle Seuil | *Sans objet* ^{(****)} | > Angle Retour Seuil | NON | OUI |
| 16 | Gauche / α ≤ -Angle Seuil | *Sans objet* (****) | < Angle Retour Seuil | NON | NON |

| | | | | | |
|---|---|---|---|---|---|
| *^{(*)} :car la condition sur l'Angle de Rotation du Volant en Entrée de Courbe n'est pas validée.* *^{(**)} :* α *est l'Angle Instantané* *^{(***)} :le signe de l'Angle de Rotation du Volant en Entrée de Courbe étant opposé à celui attendu (POSITIF pour une commande à DROITE, NEGATIF pour une commande à GAUCHE, la valeur de cet Angle est automatiquement initialisée à 0° (cf. Etape 646).* *^{(****)} : car la condition sur l'Angle de Rotation du Volant en Entrée de Courbe est déjà validée.* ^{(*****)} *: le signal sonore n'est émis qu'après 10 secondes de fonctionnement des clignotants (si véhicule en roulage)* | | | | | |

On a évoqué précédemment une temporisation qui permet de signaler au conducteur quand son indicateur est toujours en fonctionnement, par exemple après 10 secondes, alors que son véhicule est en roulage.

La valeur de cette temporisation est de préférence paramétrable afin de laisser au coducteur le choix d'en augmenter la durée pour en diminuer la gêne éventuelle.

De préférence cette valeur n'est paramétrable que si la clé de contact est en position « accessoires ».

Différents processus peuvent être retenus pour ce paramétrage. De préférence on procède comme suit.

Première étape : Faire un Appel de Phares simultanément avec une demande de Clignotant Droit ou Gauche pendant une seconde pour entrer dans le mode Programmation.
- Deuxième étape : Un signal sonore et/ou visuel signale au conducteur que sa demande est validée
- Troisième étape : On initialise la temporisation à 0.
- Quatrième étape : Chaque demande de Clignotant Droit incrémente la temporisation de 10 secondes et chaque demande de Clignotant Gauche décrémente la temporisation de 10 secondes si celle-ci est supérieure ou égale à 10 secondes.
- Cinquième étape : Un signal sonore et/ou visuel (distinct de celui de l'Etape 1) signale au conducteur l'acquittement de chaque palier de 10 secondes incrémenté
ou décrémenté.
- Sixième étape : Faire un Appel de Phares simultanément avec une demande de Clignotant Droit ou Gauche pendant une seconde pour valider la nouvelle valeur de la temporisatio et sortir du mode de programmation.
- Septième étape : Un signal sonore et/ou visuel (distinct de celui de l'Etape 1 et 5) signale au conducteur que sa demande est validé
- Huitième étape : On allume les avertisseurs de détresse autant de fois que l'on a programmé de paliers de 10 secondes (si la temporisation est égale à 40 secondes, on allume 4 fois les avertisseurs de détresse).

On notera que l'établisssement de la temporisation à 0 inhibe le signal sonore.

Selon encore d'autres caractéristiques avantageuses de l'invention, les moyens de gestion et d'analyse peuvent être sensibles à la vitesse du véhicule pour réduire l'angle de pivotement du volant pris en compte pour assurer le retour de l'ensemble en position de repos par interruption de l'alimentation des indicateurs de changement de direction, lorsque la vitesse du véhicule augmente.

L'intégration de la vitesse du véhicule peut ainsi intervenir dans le calcul de l'Angle Seuil et de l'Angle retour Seuil mentionnés précédemment.

En effet, plus la vitesse du véhicule est élevée, plus l'angle de rotation du volant sera réduit (directement lié au rayon de courbure de la route).

Ces valeurs sont déduites par exemple à partir d'abaques qui sont construits selon différents paramètres tels que la nature des pneumatiques, l'assise du véhicule, ...

Pour éviter de charger des abaques complexes en mémoire, on peut travailler avec des paliers de vitesse, par exemple et non limitativement:
0 < Vitesse Véhicule < 50 Km/h
50 Km/h ≤ Vitesse Véhicule < 70 Km/h
70 Km/h ≤ Vitesse Véhicule < 90 Km/h
90 Km/h ≤ Vitesse Véhicule < 110 Km/h
110 Km/h ≤ Vitesse Véhicule < 130 Km/h
Vitesse Véhicule ≥ 130 Km/h.

Les moyens d'indexage 400 peuvent faire l'objet de nombreux modes de réalisation. De préférence, ils sont formés d'un plot 410 sollicité par un ressort 420 contre un cran formé d'un dièdre concave 110 sur la platine support 100.

Au repos, le plot 410 repose contre le fond du dièdre 110. Il est symétrique par rapport à celui-ci.

Par contre lorsque la manette de commande est sollicitée, le plot 410 se déplace sur l'un des flancs 112 ou 114 du dièdre d'indexage par compression du ressort 420. Et dès que la manette est relâchée, l'effort exercé par le ressort 420 sur le plot 410 ramène l'équipage 200 en position de repos. Chacun des deux flancs 112, 114 du dièdre d'indexage 110 possède une amplitude suffisante de sorte que sur toute la course de déplacement de l'équipage 200, quel que soit le sens de rotation de celui-ci, le déplacement soit instable.

Bien entendu la présente invention n'est pas limitée au mode de réalisation particulier qui vient d'être décrit, mais s'étend à toute variante conforme à son esprit.

L'homme de l'art comprendra que la présente invention permet en particulier de supprimer tout mécanisme de rappel mécanique à partir d'une came portée par l'arbre de direction.

La présente invention offre en outre les avantages notables suivants :
. Gain en fiabilité sur l'aspect mécanique en substituant les positions stables du bloc manette clignotants classique par des positions instables,
. Possibilité de déporter la fonction clignotants de la colonne de direction (commande des clignotants par interrupteurs au volant par exemple),
. Eviter les retours intempestifs du bloc manette clignotants,
. Sensation tactile plus agréable grâce aux positions instables du bloc manette clignotants,
. Eviter l'extinction des clignotants en cas de manoeuvres d'évitement,
. Rendre constante la valeur d'angle de rotation au volant qui permet l'extinction des clignotants quelque soit la position du volant initialisée à l'allumage des clignotants,
. Flexibilité logicielle de la gestion de l'extinction des clignotants.

## Revendications

1. Dispositif de commande d'indicateurs de changement de direction pour véhicule automobile, comprenant :
- une platine support (100) qui porte, pour la commande des indicateurs de changement de direction, deux transducteurs (314, 320 ; 316, 330),
- au moins un équipage (200) guidé à déplacement sur la platine support (100) et alternativement selon deux sens opposés à partir d'une position de repos pour solliciter alternativement la commande des indicateurs de direction gauche ou droit, l'équipage (200) portant deux actionneurs (210, 220) disposés respectivement en regard d'un transducteur pour modifier l'état de chacun de ceux-ci,
- des moyens (400) d'indexage de l'équipage (200) dans son déplacement, définissant une position instable à l'équipage (200) dès lors que celui-ci est déplacé hors de sa position de repos, et
- un module d'analyse apte à détecter l'état des transducteurs (314, 320 ; 316, 330) et à commander les indicateurs de changement de direction en conséquence, **caractérisé par le fait que** chacun des actionneurs (210, 220) est conformé pour activer un transducteur, quel que soit le sens de déplacement de l'équipage, à partir de la position de repos, mais selon une séquence différente selon le sens de déplacement de l'équipage (200).

2. Dispositif selon la revendication 1, **caractérisé par le fait que** les transducteurs sont formés de deux paires de contacts (314, 320 ; 316, 330), susceptibles d'évoluer entre une position de fermeture dans laquelle les contacts sont en appui et une position d'ouverture dans laquelle les contacts sont séparés, et les actionneurs sont formés de deux cames (210, 220) disposées respectivement en regard d'une paire de contacts pour modifier l'état de chacune de celles-ci, chacune des cames (210, 220) étant conformée pour modifier l'état de la paire de contacts associés, quel que soit le sens de déplacement de l'équipage, à partir de la position de repos, mais selon une séquence différente selon le sens de déplacement de l'équipage (200).

3. Dispositif selon l'une des revendications 1 ou 2, **caractérisé par le fait que** les moyens d'analyse sont sensibles à des paramètres de conduite du véhicule pour interrompre l'alimentation des indicateurs de changement de direction quand le ou les paramètres requis est (sont) détecté(s).

4. Dispositif selon l'une des revendications 1 à 3, **caractérisé par le fait que** l'équipage (200) est conçu pour être déplacé successivement dans deux positions, à partir de sa position de repos, quel que soit le sens de déplacement : une position autoroute puis une position route, les deux actionneurs (210, 220) étant adaptés pour activer respectivement l'une des transducteurs (314, 320 ; 316; 330) quand l'équipage (200) est en position autoroute, selon le sens de déplacement, et les deux actionneurs (210, 200) étant adaptés pour activer les deux transducteurs (314, 320 ; 316, 330) quand l'équipage (200) est en position route.

5. Dispositif selon l'une des revendications 1 à 4, **caractérisé par le fait que** l'équipage (200) est conçu pour être déplacé successivement dans deux positions, à partir de sa position de repos, quel que soit le sens de déplacement : une position autoroute puis une position route, deux cames (210, 220) étant adaptées pour porter respectivement l'une des paires de contact (314, 320 ; 316; 330) en position de fermeture quand l'équipage (200) est en position autoroute, selon le sens de déplacement, et les deux cames (210, 200) étant adaptées pour placer les deux paires de contacts (314, 320 ; 316, 330) en position de fermeture quand l'équipage (200) est en position route.

6. Dispositif selon l'une des revendications 1 à 5, **caractérisé par le fait que** les moyens d'analyse sont adaptés pour induire l'alimentation provisoire type autoroute des indicateurs gauche ou droit quand seulement un transducteur (314, 320 ; 316, 330) est activé, l'indicateur gauche ou droit alimenté étant défini par l'identification du transducteur activé.

7. Dispositif selon l'une des revendications 1 à 6, **caractérisé par le fait que** les moyens d'analyse sont adaptés pour induire l'alimentation provisoire type autoroute des indicateurs gauche ou droit quand seulement une paire de contacts (314, 320 ; 316, 330) est en position de fermeture, l'indicateur gauche ou droit alimenté étant défini par l'identification de la paire de contacts en position de fermeture.

8. Dispositif selon l'une des revendications 1 à 7, **caractérisé par le fait que** les moyens d'analyse sont adaptés pour induire l'alimentation stable type route des indicateurs gauche ou droit quand deux transducteurs (314, 320 ; 316, 330) sont activés, l'indicateur gauche ou droit alimenté étant défini par l'identification du transducteur activé en premier.

9. Dispositif selon l'une des revendications 1 à 8, **caractérisé par le fait que** les moyens d'analyse sont adaptés pour induire l'alimentation stable type route des indicateurs gauche ou droit quand les deux paires de contacts (314, 320 ; 316, 330) sont fermées, l'indicateur gauche ou droit alimenté étant défini par l'identification de la paire de contacts portée en premier lieu en position de fermeture.

10. Dispositif selon l'une des revendications 1 à 9, **caractérisé par le fait que** l'équipage (200) est monté à pivotement sur la platine support.

11. Dispositif selon l'une des revendications 1 à 9, **caractérisé par le fait que** l'équipage (200) est monté à translation sur la platine support.

12. Dispositif selon l'une des revendications 1 à 11, **caractérisé par le fait que** les moyens de contactage électrique comprennent une lame (310) possédant une base commune (312) et dédoublée en deux brins (314, 316) placés respectivement en regard de pistes ou plots associés (320, 330) de sorte que chacune des paires de contacts soient formées de l'un des brins (314, 316) et de la piste ou plot associé.

13. Dispositif selon la revendication 12, **caractérisé par le fait que** la lame (310) est réalisée en matériau élastique et sollicitée vers la piste ou plot (320, 330) associé.

14. Dispositif selon l'une des revendications 1 à 13, **caractérisé par le fait qu'**il comprend deux cames (210, 220) symétriques par rapport à un plan radial (I) de l'équipage.

15. Dispositif selon l'une des revendications 1 à 14, **caractérisé par le fait que** les moyens d'analyse sont pilotés par un capteur d'angle associé au volant.

16. Dispositif selon l'une des revendications 1 à 15, **caractérisé par le fait que** les moyens d'analyse sont sensibles à deux commandes successives à déplacement de l'équipage (200) dans un intervalle de temps limité.

17. Dispositif selon l'une des revendications 1 à 16, **caractérisé par le fait que** les moyens d'analyse sont sensibles à la vitesse de déplacement du véhicule.

18. Dispositif selon l'une des revendications 1 à 17, **caractérisé par le fait que** les moyens d'indexage comprennent un plot (410) porté par l'équipage (200) et sollicité par un ressort (420) contre un cran en forme de dièdre concave (110) porté par la platine support.

19. Dispositif selon l'une des revendications 1 à 18, **caractérisé par le fait qu'**il comprend en outre au moins un capteur d'angle apte à détecter l'angle de rotation du volant et les moyens de gestion du module d'analyse sont sensibles à l'information délivrée par ce capteur pour piloter l'interruption de l'alimentation des indicateurs de changement de direction.

20. Dispositif selon l'une des revendications 1 à 19, **caractérisé par** le fait le transducteur (300) est choisi dans le groupe comprenant des contacts électriques, et des transducteurs sans contacts mécaniques, tels que des transducteurs optiques ou magnétiques, notamment des sondes à effet Hall.

21. Dispositif selon l'une des revendications 1 à 20, **caractérisé par le fait que** le module d'analyse est sensible à la course de déplacement de l'équipage (200) pour assurer automatiquement (500, 520) l'extinction des indicateurs lorsque l'équipage (200) est relâché après avoir été déplacé seulement sur une amplitude limitée correspondant à une position autoroute.

22. Dispositif selon l'une des revendications 1 à 21, **caractérisé par le fait que** le module d'analyse est sensible à la course de déplacement de l'équipage (200) pour assurer automatiquement (510, 520) l'extinction des indicateurs lorsque après avoir été déplacé sur une amplitude importante correspondant à une position route, il détecte une commande manuelle d'extinction (600) ou des paramètres propres à imposer une extinction automatique (700).

23. Dispositif selon l'une des revendications 1 à 22, **caractérisé par le fait que** le module d'analyse détecte (604, 630, 634) une position nouvelle de l'équipage (200) par détection d'un changement de front en sortie du transducteur (300).

24. Dispositif selon l'une des revendications 1 à 23, **caractérisé par le fait que** le module d'analyse détecte une position nouvelle de l'équipage (200) pour rechercher si un mode instable d'alimentation (604), un mode permanent d'alimentation (630) ou un retour de l'équipage en position de repos (634), est sollicité.

25. Dispositif selon l'une des revendications 1 à 24, **caractérisé par le fait que** le module d'analyse est sensible (608) à la nature des indicateurs sollicités, gauche ou droit, et gère (612, 614, 622, 624) l'état final des indicateurs en fonction de leur état initial (610, 620).

26. Dispositif selon la revendication 25, **caractérisé par le fait que** le module d'analyse (612, 614, 622, 624) éteint les indicateurs quant il détecte une sollicitation d'indicateurs précédemment allumés, et allume ceux-ci dans le cas contraire.

27. Dispositif selon l'une des revendications 1 à 26, **caractérisé par le fait que** le module d'analyse opère (642, 644) une réinitialisation (646) de valeur d'angle, lorsqu'il détecte une rotation de volant contraire à la nature d'une commande antérieure.

28. Dispositif selon l'une des revendications 1 à 27, **caractérisé par le fait que** le module d'analyse est sensible à l'angle de rotation du volant et compare cet angle à une valeur seuil, pour opérer une validation d'entrée en courbe (702, 706).

29. Dispositif selon l'une des revendications 1 à 28, **caractérisé par le fait que** le module d'analyse compare l'angle instantané de rotation du volant avec une valeur seuil de +/- 180° (704, 708).

30. Dispositif selon l'une des revendications 1 à 29, **caractérisé par le fait que** le module d'analyse invalide (710) la prise en compte de la rotation du volant lorsque celle-ci est supérieure à un seuil de vitessse choisi.

31. Dispositif selon l'une des revendications 1 à 30, **caractérisé par le fait que** le module d'analyse recherche (712) si l'angle de rotation inverse imprimé au volant pour remettre les roues droites est supérieur à un angle retour seuil, pour détecter une sortie de courbe.

32. Dispositif selon l'une des revendications 1 à 31, **caractérisé par le fait que** le module d'analyse recherche (712) si la différence entre l'angle max et l'angle instantané est inférieur à un angle retour seuil.

33. Dispositif selon l'une des revendications 1 à 32, **caractérisé par le fait que** le module d'analyse est sensible (714) au temps de fonctionnement des indicateurs.

34. Dispositif selon l'une des revendications 1 à 33, **caractérisé par le fait que** le module d'analyse est sensible (716) à l'arrêt du véhicule.

35. Dispositif selon l'une des revendications 1 à 34, **caractérisé par le fait que** le module d'analyse initialise une temporisation (720) si les indicateurs sont alimentés pendant un temps supérieur à un seuil, véhicule à l'arrêt.

36. Dispositif selon l'une des revendications 1 à 35, **caractérisé par le fait que** le module d'analyse émet un signal sonore (718) si les indicateurs sont alimentés pendant un temps supérieur à un seuil, véhicule en roulage.

37. Dispositif selon l'une des revendications 33, 35 et 36, **caractérisé par le fait que** le temps et la temporisation sont paramétrables.

38. Dispositif selon la revendication 37, **caractérisé par le fait que** le paramétrage de la temporisation est réalisée par commande de l'équipage (200).

39. Dispositif selon l'une des revendications 37 ou 38, **caractérisé par le fait que** le module d'analyse détecte une demande de paramétrage par commande d'une sollicitation de l'équipage simultanément à une autre commande auxiliaire.

## Claims

1. A device for controlling vehicle direction indicators, comprising:
- a supporting plate (100) which bears two transducers (314,320; 316,330) for controlling the indicators of a change in direction,
- at least one guided mobile assembly (200) displaceable on the supporting plate (100) and alternately along two opposite directions from a rest position in order to alternately actuate the control of the left or right direction indicators, the mobile assembly (200) bearing two actuators (210, 220) respectively positioned facing a transducer in order to change the state of each of the latter,
- means (400) for indexing the mobile assembly (200) in its displacement, defining an unstable position for the mobile assembly (200) as soon as the latter is displaced away from its rest position, and
- an analysis module capable of detecting the state of the transducers (314, 320; 316, 330) and of controlling the direction indicators accordingly, **characterized by** the fact that each of the actuators (210, 220) is conformed in order to activate a transducer, regardless of the displacement direction of the mobile assembly, from the rest position, but according to a different sequence depending on the displacement direction of the mobile assembly (200).

2. The device according to claim 1, **characterized by** the fact that the transducers are formed by two pairs of contacts (314, 320; 316, 330), capable of moving between a closed position in which the contacts are supported and an open position in which the contacts are separated, and the actuators are formed by two cams (210, 220) respectively positioned facing a pair of contacts in order to change the state of each of the latter, each of the cams (210, 220) being conformed so as to change the state of the pair of associated contacts, regardless of the displacement direction of the mobile assembly, from the rest position, but according to a different sequence depending on the displacement direction of the mobile assembly (200).

3. The device according to any of claims 1 or 2, **characterized by** the fact that analysis means are sensitive to vehicle driving parameters in order to interrupt the powering of the direction indicators when the required parameter(s) is (are) detected.

4. The device according to any of claims 1 to 3, **characterized by** the fact that the mobile assembly (200) is designed so as to be successively displaced into two positions, from its rest position, regardless of the displacement direction: a motorway position and then a road position, both actuators (210, 220) being adapted so as to respectively activate one of the transducers (314, 320; 316, 330) when the mobile assembly (200) is in the motorway position, depending on the displacement direction, and both actuators (210, 220) being adapted so as to activate both transducers (314, 320; 316, 330) when the mobile assembly (200) is in the road position.

5. The device according to any of claims 1 to 4, **characterized by** the fact that the mobile assembly (200) is designed so as to be successively displaced into two positions, from its rest position, regardless of the displacement direction: a motorway position and then a road position, two cams (210, 220) being adapted so as to respectively bear one of the contact pairs (314, 320; 316; 330) in the closed position when the mobile assembly (200) is in the motorway position, depending on the displacement direction, and both cams (210, 220) being adapted so as to place both pairs of contacts (314, 320; 316, 330) in the closed position when the mobile assembly (200) is in the road position.

6. The device according to any of claims 1 to 5, **characterized in that** the analysis means are adapted so as to induce motorway type temporary powering of the left or right indicators when only one transducer (314, 320; 316, 330) is activated, the powered left or right indicator being defined by the identification of the activated transducer.

7. The device according to any of claims 1 to 6, **characterized by** the fact that the analysis means are adapted so as to induce motorway type temporary powering of the left or right indicators when only one pair of contacts (314, 320; 316, 330) is in the closed position, the powered left or right indicator being defined by the identification of the pair of contacts in the closed position.

8. The device according to any of claims 1 to 7, **characterized by** the fact that the analysis means are adapted in order to induce road type stable powering of the left or right indicators when two transducers (314, 320; 316, 330) are activated, the powered left or right indicator being defined by the identification of the transducer activated in the first place.

9. The device according to any of claims 1 to 8, **characterized by** the fact that the analysis means are adapted so as induce road type stable powering of the left or right indicators when both pairs of contacts (314, 320; 316, 330) are closed, the powered left or right indicator being defined by identification of the pair of contacts first brought into the closed position.

10. The device according to any of claims 1 to 9, **characterized by** the fact that the mobile assembly (200) is pivotably mounted on the supporting plate.

11. The device according to any of claims 1 to 9, **characterized by** the fact that the mobile assembly (200) is translatably mounted on the supporting plate.

12. The device according to any of claims 1 to 11, **characterized by** the fact that the electric contacting means comprise a blade (310) having a common base (312) and split into two strands (314, 316) respectively placed facing associated tracks or pads (320, 330) so that each of the pairs of contacts are formed by one of the strands (314, 316) and the associated track or pad.

13. The device according to claim 12, **characterized by** the fact that the blade (310) is made in an elastic material and urged towards the associated tract or pad (320, 330).

14. The device according to any of claims 1 to 13, **characterized by** the fact that it comprises two cams (210, 220), symmetrical relatively to a radial plane (I) of the mobile assembly.

15. The device according to any of claims 1 to 14, **characterized by** the fact that the analysis means are driven by an angle sensor associated with the steering wheel.

16. The device according to any of claims 1 to 15, **characterized by** the fact that the analysis means are sensitive to two successive commands for displacing the mobile assembly (200) within a limited time interval.

17. The device according to any of claims 1 to 16, **characterized by** the fact that the analysis means are sensitive to the displacement speed of the vehicle.

18. The device according to any of claims 1 to 17, **characterized by** the fact that the indexing means comprise a pad (410) borne by the mobile assembly (200) and urged by a spring (420) against a notch in the form of a concave dihedral (110) borne by the supporting plate.

19. The device according to any of claims 1 to 18, **characterized by** the fact that it further comprises at least one angle sensor capable of detecting the angle of rotation of the steering wheel and the handling means of the analysis module are sensitive to the information delivered by this sensor for controlling the interruption of the powering of the direction indicators.

20. The device according to any of claims 1 to 19, **characterized by** the fact that the transducer (300) is selected from the group comprising electric contacts, and transducers without any mechanical contacts, such as optical or magnetic transducers, notably Hall effect probes.

21. The device according to any of claims 1 to 20, **characterized by** the fact that the analysis module is sensitive to the displacement travel of the mobile assembly (200) in order to automatically provide (500, 520) the switching-off of the indicators when the mobile assembly (200) is released after having only been displaced over a limited amplitude corresponding to a motorway position.

22. The device according to any of claims 1 to 21, **characterized by** the fact that the analysis module is sensitive to the displacement travel of the mobile assembly (200) in order to automatically provide (510, 520) the switching-off of the indicators when, after having been displaced over a significant amplitude corresponding to a road position, it detects a manual switching-off command (600) or parameters able to impose automatic switching-off (700).

23. The device according to any of claims 1 to 22, **characterized by** the fact that the analysis module detects (604, 630, 634) a new position of the mobile assembly (200) by detecting a change in signal front at the output of the transducer (300).

24. The device according to any of claims 1 to 23, **characterized by** the fact that the analysis module detects a new position of the mobile assembly (200) in order to try to determine whether an unstable powering mode (604), a permanent powering mode (630) or a return of the mobile assembly to the rest position (634) is actuated.

25. The device according to any of claims 1 to 24, **characterized by** the fact that the analysis module is sensitive (608) to the nature of the actuated left or right indicators, and handles (612, 614, 622, 624) the final state of the indicators according to their initial state (610, 620).

26. The device according to claim 25, **characterized by** the fact that the analysis module (612, 614, 622, 624) switches off the indicators when it detects actuation of indicators previously switched on, and switches on the latter in the opposite case.

27. The device according to any of claims 1 to 26, **characterized by** the fact that the analysis module performs (642, 644) resetting (646) of the angle value, when it detects a steering wheel rotation contrary to the nature of a previous command.

28. The device according to any of claims 1 to 27, **characterized by** the fact that the analysis module is sensitive to the angle of rotation of the steering wheel and compares this angle with a threshold value in order to perform validation of entering a bend (702, 706).

29. The device according to any of claims 1 to 28, **characterized by** the fact that the analysis module compares the instantaneous angle of rotation of the steering wheel with a threshold value of ± 180° (704, 708).

30. The device according to any of claims 1 to 29, **characterized by** the fact that the analysis module invalidates (710) the taking into account of the rotation of the steering wheel when the latter is above a selected speed threshold.

31. The device according to any of claims 1 to 30, **characterized by** the fact that the analysis module tries to determine (712) whether the opposite angle of rotation imparted to the steering wheel in order to straighten the wheels is larger than a threshold return angle for detecting the leaving of a bend.

32. The device according to any of claims 1 to 31, **characterized by** the fact that the analysis module tries to determine (712) whether the difference between the maximum angle and the instantaneous angle is less than a threshold return angle.

33. The device according to any of claims 1 to 32, **characterized by** the fact that the analysis module is sensitive (714) to the operating time of the indicators.

34. The device according to any of claims 1 to 33, **characterized by** the fact that the analysis module is sensitive (716) to the stopping of the vehicle.

35. The device according to any of claims 1 to 34, **characterized by** the fact that the analysis module initializes a time-out (720) if the indicators are powered for a period of time above a threshold, the vehicle being stationary.

36. The device according to any of claims 1 to 35, **characterized by** the fact that the analysis module emits a sound signal (718) if the indicators are powered for a period of time above a threshold, the vehicle being in motion.

37. The device according to any of claims 33, 35 and 36, **characterized by** the fact that the period of time and the time-out are

38. The device according to claim 37, **characterized by** the fact that the parametrization of the time-out is achieved by controlling the mobile assembly (200).

39. The device according to any of claims 37 or 38, **characterized by** the fact that the analysis module detects a request for parametrization by controlling actuation of the mobile assembly simultaneously with another auxiliary control.

## Patentansprüche

1. Steuerungsvorrichtung für die Fahrtrichtungsanzeigen eines Kraftfahrzeugs, umfassend:
- eine Tragplatte (100), die zur Steuerung der Fahrtrichtungsanzeigen zwei Transduktoren (314, 320; 316, 330) trägt,
- mindestens Organ (200), das auf der Tragplatte (100) verschiebend geführt wird und abwechselnd in zwei entgegengesetzte Richtungen aus einer Ruhestellung, um abwechselnd die Steuerung der linken oder rechten Fahrtrichtungsanzeige anzusprechen, wobei das Organ (200) zwei Aktuatoren (210, 220) trägt, die jeweils gegenüber einem Transduktor angeordnet sind, um den Zustand jedes von ihnen zu verändern,
- Indexierungsmittel (400) des Organs (200) bei seiner Verschiebung, die eine instabile Stellung des Organs (200) definieren, sobald dieses aus seiner Ruhestellung verschoben ist, und
- ein Analysemodul, das imstande ist, den Zustand der Transduktoren (314, 320; 316, 330) zu bestimmen und die Fahrtrichtungsanzeigen entsprechend zu steuern,
**dadurch gekennzeichnet, dass** jeder Aktuator (210, 220) aufgebaut ist, um einen Transduktor zu aktivieren, unabhängig von der Verschieberichtung des Organs aus einer Ruhestellung, aber gemäß einer unterschiedlichen Sequenz je nach Verschieberichtung des Organs (200).

2. Vorrichtung nach Anspruch 1, **dadurch gekennzeichnet, dass** die Transduktoren von zwei Kontaktpaaren (314, 320; 316, 330) gebildet werden, die sich zwischen einer Verschlussstellung entwickeln, in der die Kontakte aufliegen, und einer Öffnungsstellung, in der die Kontakte getrennt sind, und die Aktuatoren von zwei Nocken (210, 220) gebildet werden, die jeweils gegenüber einem Kontaktpaar angeordnet sind, um den Zustand eines jeden der Paare zu verändern, wobei jeder Nocken (210, 220) ausgebildet ist, um den Zustand des zugeordneten Kontaktpaars unabhängig von der Verschieberichtung des Organs aus der Ruhestellung zu verändern, aber gemäß einer unterschiedlichen Sequenz je nach Verschieberichtung des Organs (200).

3. Vorrichtung nach einem der Ansprüche 1 oder 2, **dadurch gekennzeichnet, dass** die Analysemittel auf Parameter des Führens des Fahrzeugs reagieren, um die Versorgung der Fahrtrichtungsanzeigen zu unterbrechen, wenn der oder die erforderlichen Parameter festgestellt werden.

4. Vorrichtung nach einem der Ansprüche 1 bis 3, **dadurch gekennzeichnet, dass** das Organ (200) konstruiert ist, um aus seiner Ruhestellung unabhängig von der Verschieberichtung schrittweise in zwei Stellungen - eine Autobahnstellung und eine Straßenstellung - verschoben zu werden, wobei die zwei Aktuatoren (210, 220) ausgebildet sind, um gemäß der Verschieberichtung jeweils einen der Transduktoren (314, 320; 316; 330) zu aktivieren, wenn das Organ (200) in Autobahnstellung ist, und die zwei Aktuatoren (210, 220) ausgebildet sind, um die zwei Transduktoren (314, 320; 316, 330) zu aktivieren, wenn das Organ (200) in Straßenstellung ist.

5. Vorrichtung nach einem der Ansprüche 1 bis 4, **dadurch gekennzeichnet, dass** das Organ (200) konstruiert ist, um aus seiner Ruhestellung unabhängig von der Verschieberichtung schrittweise in zwei Stellungen - eine Autobahnstellung und eine Straßenstellung - verschoben zu werden, wobei zwei Nocken (210, 220) ausgebildet sind, um gemäß der Verschieberichtung jeweils eines der Kontaktpaare (314, 320; 316; 330) in Verschlussstellung zu bringen, wenn das Organ (200) in Autobahnstellung ist, und die zwei Nocken (210, 220) ausgebildet sind, um die zwei Kontaktpaare (314, 320; 316, 330) in Verschlussstellung zu bringen, wenn das Organ (200) in Straßenstellung ist.

6. Vorrichtung nach einem der Ansprüche 1 bis 5, **dadurch gekennzeichnet, dass** die Analysemittel ausgebildet sind, um die vorläufige Versorgung Autobahntyp der linken oder rechten Anzeige hervorzurufen, wenn nur ein Transduktor (314, 320; 316, 330) aktiviert ist, wobei die versorgte linke oder rechte Anzeige durch Identifizierung des aktivierten Transduktors definiert ist.

7. Vorrichtung nach einem der Ansprüche 1 bis 6, **dadurch gekennzeichnet, dass** die Analysemittel ausgebildet sind, um die vorläufige Versorgung Autobahntyp der linken oder rechten Anzeige hervorzurufen, wenn nur ein Kontaktpaar (314, 320; 316, 330) in Verschlussstellung ist, wobei die versorgte linke oder rechte Anzeige durch Identifizierung des Kontaktpaars in Verschlussstellung definiert ist.

8. Vorrichtung nach einem der Ansprüche 1 bis 7, **dadurch gekennzeichnet, dass** die Analysemittel ausgebildet sind, um die stabile Versorgung Straßentyp der linken oder rechten Anzeige hervorzurufen, wenn zwei Transduktoren (314, 320; 316, 330) aktiviert sind, wobei die versorgte linke oder rechte Anzeige durch Identifizierung des zuerst aktivierten Transduktors definiert ist.

9. Vorrichtung nach einem der Ansprüche 1 bis 8, **dadurch gekennzeichnet, dass** die Analysemittel ausgebildet sind, um die stabile Versorgung Straßentyp der linken oder rechten Anzeige hervorzurufen, wenn die zwei Kontaktpaare (314, 320; 316, 330) geschlossen sind, wobei die versorgte linke oder rechte Anzeige durch Identifizierung des Kontaktpaars definiert ist, das zuerst in Verschlussstellung gebracht wurde.

10. Vorrichtung nach einem der Ansprüche 1 bis 9, **dadurch gekennzeichnet, dass** das Organ (200) schwenkbar auf der Tragplatte montiert ist.

11. Vorrichtung nach einem der Ansprüche 1 bis 9, **dadurch gekennzeichnet, dass** das Organ (200) verschiebbar auf der Tragplatte montiert ist.

12. Vorrichtung nach einem der Ansprüche 1 bis 11, **dadurch gekennzeichnet, dass** die elektrischen Kontaktmittel eine Zunge (310) umfassen, die eine gemeinsame Basis (312) besitzt und in zwei Abschnitte (314, 316) geteilt ist, die jeweils gegenüber den zugeordneten Bahnen oder Kontakten (320, 330) platziert sind, so dass jedes Kontaktpaar von einem der Abschnitte (314, 316) und der zugeordneten Bahn oder dem Kontakt gebildet wird.

13. Vorrichtung nach Anspruch 12, **dadurch gekennzeichnet, dass** die Zunge (310) aus einem elastischen Material gefertigt ist und gegen die zugeordnete Bahn oder den Kontakt (320, 330) beansprucht wird.

14. Vorrichtung nach einem der Ansprüche 1 bis 13, **dadurch gekennzeichnet, dass** sie zwei im Verhältnis zu einer radialen Ebene (I) des Organs symmetrische Nocken (210, 220) umfasst.

15. Vorrichtung nach einem der Ansprüche 1 bis 14, **dadurch gekennzeichnet, dass** die Analysemittel von einem dem Lenkrad zugeordneten Winkelsensor gesteuert werden.

16. Vorrichtung nach einem der Ansprüche 1 bis 15, **dadurch gekennzeichnet, dass** die Analysemittel auf zwei aufeinanderfolgende Befehle zur Verschiebung des Organs (200) in einem begrenzten Zeitintervall reagieren.

17. Vorrichtung nach einem der Ansprüche 1 bis 16, **dadurch gekennzeichnet, dass** die Analysemittel auf die Fortbewegungsgeschwindigkeit des Fahrzeugs reagieren.

18. Vorrichtung nach einem der Ansprüche 1 bis 17, **dadurch gekennzeichnet, dass** die Indexierungsmittel einen Kontakt (410) umfassen, der von dem Organ (200) getragen und von einer Feder (420) gegen eine V-förmige konkave Kerbe (110) beansprucht wird, die von der Tragplatte getragen wird.

19. Vorrichtung nach einem der Ansprüche 1 bis 18, **dadurch gekennzeichnet, dass** sie weiterhin mindestens einen Winkelsensor umfasst, der imstande ist, den Drehwinkel des Lenkrads zu erfassen und die Mittel zur Verwaltung des Analysemoduls auf die von diesem Sensor gelieferte Information reagieren, um die Unterbrechung der Versorgung der Fahrtrichtungsanzeigen zu steuern.

20. Vorrichtung nach einem der Ansprüche 1 bis 19, **dadurch gekennzeichnet, dass** der Transduktor (300) aus der Gruppe ausgewählt ist, die elektrische Kontakte und Transduktoren ohne mechanische Kontakte wie optische oder magnetische Transduktoren, vor allem Sonden mit Hall-Effekt, umfasst.

21. Vorrichtung nach einem der Ansprüche 1 bis 20, **dadurch gekennzeichnet, dass** das Analysemodul auf den Verschiebungslauf des Organs (200) reagiert, um automatisch (500, 520) das Verlöschen der Anzeigen sicherzustellen, wenn das Organ (200) losgelassen wird, nachdem es nur über eine begrenzte Amplitude verschoben wurde, die einer Autobahnstellung entspricht.

22. Vorrichtung nach einem der Ansprüche 1 bis 21, **dadurch gekennzeichnet, dass** das Analysemodul auf den Verschiebungslauf des Organs (200) reagiert, um automatisch (510, 520) das Verlöschen der Anzeigen sicherzustellen, wenn es, nach Verschiebung über eine große Amplitude, die einer Straßenstellung entspricht, einen manuellen Befehl zum Verlöschen (600) ermittelt oder Parameter, die ein automatisches Verlöschen (700) befehlen.

23. Vorrichtung nach einem der Ansprüche 1 bis 22, **dadurch gekennzeichnet, dass** das Analysemodul (604, 630, 634) eine neue Stellung des Organs (200) durch Ermittlung einer Frontänderung am Ausgang des Transduktors (300) ermittelt.

24. Vorrichtung nach einem der Ansprüche 1 bis 23, **dadurch gekennzeichnet, dass** das Analysemodul eine neue Stellung des Organs (200) ermittelt, um zu untersuchen, ob ein instabiler Versorgungsmodus (604), ein ständiger Versorgungsmodus (630) oder eine Rückkehr des Organs in Ruhestellung (634) gefordert ist.

25. Vorrichtung nach einem der Ansprüche 1 bis 24, **dadurch gekennzeichnet, dass** das Analysemodul (608) auf die Art der angesprochenen Anzeigen, links oder rechts, reagiert und den Endzustand der Anzeigen in Abhängigkeit von ihrem Ausgangszustand (610, 620) verwaltet (612, 614, 622, 624).

26. Vorrichtung nach Anspruch 25, **dadurch gekennzeichnet, dass** das Analysemodul (612, 614, 622, 624) die Anzeigen ausschaltet, wenn es eine Beanspruchung von zuvor eingeschalteten Anzeigen feststellt, und diese im gegenteiligen Fall einschaltet.

27. Vorrichtung nach einem der Ansprüche 1 bis 26, **dadurch gekennzeichnet, dass** das Analysemodul (642, 644) eine Winkelwert-Neuinitialisierung (646) durchführt, wenn es eine Drehung des Lenkrads entgegengesetzt zur Art eines vorherigen Befehls feststellt.

28. Vorrichtung nach einem der Ansprüche 1 bis 27, **dadurch gekennzeichnet, dass** das Analysemodul auf den Drehwinkel des Lenkrads reagiert und diesen Winkel mit einem Schwellenwert vergleicht, um eine Kurveneintrittsvalidierung (702, 706) vorzunehmen.

29. Vorrichtung nach einem der Ansprüche 1 bis 28, **dadurch gekennzeichnet, dass** das Analysemodul den momentanen Drehwinkel des Lenkrads mit einem Schwellenwert von +/- 180° (704, 708) vergleicht.

30. Vorrichtung nach einem der Ansprüche 1 bis 29, **dadurch gekennzeichnet, dass** das Analysemodul (710) die Berücksichtigung der Rotation des Lenkrads annulliert, wenn diese über einer gewählten Geschwindigkeitsschwelle liegt.

31. Vorrichtung nach einem der Ansprüche 1 bis 30, **dadurch gekennzeichnet, dass** das Analysemodul (712) untersucht, ob der gegenläufige Drehwinkel, der auf das Lenkrad ausgeübt wird, um die Räder gerade zu stellen, größer ist als ein Schwellen-Rückkehrwinkel, um einen Kurvenaustritt zu ermitteln.

32. Vorrichtung nach einem der Ansprüche 1 bis 31, **dadurch gekennzeichnet, dass** das Analysemodul (712) untersucht, ob die Differenz zwischen dem maximalen Winkel und dem momentanen Winkel kleiner als ein Schwellen-Rückkehrwinkel ist.

33. Vorrichtung nach einem der Ansprüche 1 bis 32, **dadurch gekennzeichnet, dass** das Analysemodul (714) auf die Funktionszeit der Anzeigen reagiert.

34. Vorrichtung nach einem der Ansprüche 1 bis 33, **dadurch gekennzeichnet, dass** das Analysemodul (716) auf das Anhalten des Fahrzeugs reagiert.

35. Vorrichtung nach einem der Ansprüche 1 bis 34, **dadurch gekennzeichnet, dass** das Analysemodul eine Verzögerung (720) initialisiert, wenn die Anzeigen bei haltendem Fahrzeug während einer Zeit versorgt werden, die über einer Schwelle liegt.

36. Vorrichtung nach einem der Ansprüche 1 bis 35, **dadurch gekennzeichnet, dass** das Analysemodul ein Tonsignal (718) aussendet, wenn die Anzeigen bei fahrendem Fahrzeug während einer Zeit versorgt werden, die über einer Schwelle liegt.

37. Vorrichtung nach einem der Ansprüche 33, 35 und 36, **dadurch gekennzeichnet, dass** die Zeit und die Verzögerung parametrierbar sind.

38. Vorrichtung nach Anspruch 37, **dadurch gekennzeichnet, dass** die Parametrierung der Verzögerung durch Steuerung des Organs (200) erfolgt.

39. Vorrichtung nach einem der Ansprüche 37 oder 38, **dadurch gekennzeichnet, dass** das Analysemodul eine Parametrierungsanforderung durch Steuerung einer Beanspruchung des Organs gemeinsam mit einem anderen Hilfsbefehl ermittelt.
